# DEMANDE DE BREVET EUROPEEN

(11) **EP 0 753 440 A1**
(43) Date de publication de la demande: **15.01.1997**
(21) Numéro de dépôt: 96401534.1
(22) Date de dépôt: 11.07.1996
(51) Int. Cl.: B60S 1/34

(54) **Essuie-glace de véhicule automobile comportant des moyens perfectionnés de réglage de la force d'essuyage**

(30) Priorité: 12.07.1995 FR 9508589
(71) Demandeur: PAUL JOURNEE S.A., F-60240 Reilly (FR)
(72) Inventeur: Journee, Maurice, 60240 Reilly (FR)
(74) Mandataire: Kohn, Philippe

(57) **Abrégé**

Essuie-glace (10) de véhicule automobile, comportant un bras d'essuie-glace (14) qui porte un balai d'essuie-glace et qui est monté articulé, autour d'un axe d'articulation (Y-Y), sur une tête d'entraînement (12), un ressort (28) qui applique au bras d'essuie-glace (14) une force dont la droite-support (D) n'est pas concourante avec l'axe d'articulation (Y-Y) pour appliquer au bras d'essuie-glace (14) un couple d'essuyage, et comportant des moyens pour faire varier la distance entre la droite (D) support de la force et l'axe d'articulation (Y-Y), qui comportent une lame (40) déformable élastiquement appartenant à une pince élastique de réglage (38) dont elle constitue une première branche (40) et dont la seconde branche (42) prend appui contre une portion en vis-à-vis (60, 62) de la tête d'entraînement (12), ou du bras d'essuie-glace.

## Description

La présente invention concerne un essuie-glace, notamment de véhicule automobile, du type comportant un bras d'essuie-glace qui porte au moins un balai d'essuie-glace et qui est monté articulé, autour d'un axe d'articulation, sur une tête d'entraînement du bras d'essuie-glace.

La tête d'entraînement est entraînée dans un mouvement de rotation alternatif par un arbre d'essuyage, également appelé arbre moteur, afin d'obtenir un balayage de la vitre à essuyer.

Le bras d'essuie-glace porte, par l'intermédiaire du porte-balais, un balai d'essuie-glace qui est articulé et qui est apte à essuyer la surface vitrée, telle que par exemple un pare-brise de véhicule automobile.

Afin d'obtenir un essuyage efficace de la surface vitrée, il est nécessaire que la lame d'essuyage de l'essuie-glace soit appliquée sur la surface vitrée à essuyer avec une force de pression, ou force d'essuyage, suffisamment importante.

Dans ce but, il est connu de prévoir au moins un ressort, tel que par exemple un ressort hélicoïdal de compression ou de traction, qui est agencé entre la tête d'entraînement et le bras d'essuie-glace et qui applique à ce dernier une force dont la droite support n'est pas concourante avec l'axe d'articulation du essuie-glace sur la tête d'entraînement, de manière à appliquer au bras d'essuie-glace un couple d'essuyage, également appelé couple nominal d'essuyage, dont la valeur est sensiblement constante.

Par la conception de ce dispositif, la lame d'essuyage est appuyée pendant le mouvement de balayage sur la surface vitrée.

On comprend aisément que la qualité de l'essuyage dépend du réglage initial de la valeur du couple d'essuyage.

Cette valeur dépend des caractéristiques et des dimensions des différents composants, notamment de la constante élastique du ressort, ainsi que de la qualité de l'assemblage réalisé.

La valeur du couple d'essuyage dépend également de la position relative de l'ensemble de l'essuie-glace par rapport à la surface vitrée à essuyer, la précision de cette position dépendant notamment du positionnement de l'arbre moteur par rapport à la structure d'encadrement de la vitre à essuyer.

Il est donc souhaitable de pouvoir réaliser initialement, c'est-à-dire après l'assemblage de l'essuie-glace, un réglage de la valeur du couple d'essuyage.

A cet effet, il a déjà été proposé dans la demande de brevet français n° 92 07119 un essuie-glace du type mentionné précédemment, comportant des moyens pour faire varier la distance entre la droite-support de la force exercée par le ressort et l'axe d'articulation du bras d'essuie-glace sur la tête d'entraînement.

Les différentes conceptions proposées dans ce document visant à faire varier la position de l'extrémité du ressort qui est relié à la tête d'entraînement, la position de l'axe d'articulation du bras d'essuie-glace étant fixe par rapport à la tête d'entraînement, ont pour inconvénients d'être de structures complexes, ceci résultant notamment de la nécessité, dans le cas de ce document, de pouvoir faire varier, en fonctionnement, la valeur du couple d'essuyage entre une position normale de fonctionnement de l'essuie-glace et une position dite de soulagement lorsque l'essuie-glace est au repos.

Une structure des moyens de réglage qui soit simple et économique a été décrite et représentée dans son principe dans la demande de brevet français n° 94 07041 qui décrit et représente un essuie-glace du type mentionné précédemment dans lequel les moyens pour faire varier la distance entre la droite-support de la force et l'axe d'articulation comportent une lame déformable élastiquement dont l'une des extrémités est reliée à la tête d'entraînement, ou au bras d'essuie-glace, et dont l'autre extrémité sert à l'accrochage du ressort.

Ce document propose un mode de réalisation de ce principe de réglage qui consiste à réaliser la lame déformable élastiquement sous la forme d'une bande métallique pliée dont une extrémité est rivetée ou soudée sur la tête d'entraînement et qui comporte une vis de réglage pour déplacer la lame par rapport à l'axe d'articulation.

Ce type de réalisation peut nécessiter des changements importants sur la chaîne de fabrication et d'assemblage de l'essuie-glace, et notamment dans le processus de réalisation de la tête d'entraînement qui doit être complété par une opération de fixation de la lame déformable par rivetage ou soudage selon une direction différente des autres opérations principales d'assemblage.

La présente invention a pour but de proposer un essuie-glace du type mentionné précédemment qui évite cet inconvénient.

Dans ce but, l'invention propose un essuie-glace caractérisé en ce que la lame déformable appartient à une pince élastique de réglage dont elle constitue une première branche et dont la seconde branche prend appui contre une partie en vis-à-vis de la tête d'entraînement, ou du bras d'essuie-glace.

Selon d'autres caractéristiques de l'invention :
- une vis de réglage est interposée entre les deux branches de la pièce pour faire varier l'ouverture de la pince et donc pour déplacer l'extrémité libre de la première branche, à laquelle est accroché le ressort, par rapport à l'extrémité d'articulation de cette branche sur la seconde branche ;
- la vis est montée vissée dans le corps de l'une des branches et son extrémité libre prend appui contre une partie en vis-à-vis de l'autre branche ;
- les deux branches de la pince sont reliées entre elles par une tête de raccordement qui comporte un trou transversal, sensiblement perpendiculaire à la direction longitudinale des branches, qui reçoit une broche de montage de la pince sur la tête d'entraînement, ou le bras d'essuie-glace ;
- la broche de montage s'étend selon une direction sensiblement parallèle à l'axe d'articulation du bras d'essuie-glace sur la tête d'entraînement ;
- la seconde branche de la pince de réglage est fixée sur la tête d'entraînement, ou sur le bras d'essuie-glace, contre ladite portion en vis-à-vis ;
- la pince de réglage est reliée à la tête d'entraînement et l'extrémité libre de la seconde branche comporte un bec qui est susceptible de coopérer avec un cran correspondant formé sur le bras d'essuie-glace pour maintenir ce dernier dans une position angulaire déterminée par rapport à la tête d'entraînement, notamment dans une position soulevée dans laquelle le balai d'essuie-glace n'est pas en contact avec la vitre à essuyer, le bec s'effaçant par déformation élastique de la seconde branche ;
- la pince élastique est une pince moulée en matière plastique ;
- la face de la seconde branche de la pince élastique opposée à la première branche comporte deux talons espacés longitudinalement qui prennent appui contre une portion en vis-à-vis de la tête d'entraînement, ou du bras d'essuie-glace, et entre lesquels est agencée la tête de la vis de réglage ;
- ladite portion en vis-à-vis comporte un orifice d'accès depuis l'extérieur à la vis de réglage ;
- ladite portion en vis-à-vis comporte un orifice de passage de la tête de la vis de réglage qui s'étend à l'extérieur de la tête d'entraînement, ou du bras d'essuie-glace.

D'autres caractéristiques et avantages de l'invention apparaîtront à la lecture de la description détaillée qui va suivre pour la compréhension de laquelle on se reportera aux dessins annexés dans lesquels :
- La figure 1 est une vue schématique en perspective des principaux composants des moyens de réglage d'un essuie-glace réalisé conformément aux enseignements de l'invention ;
- la figure 2 est une vue schématique, en section partielle par un plan longitudinal médian de l'essuie-glace perpendiculaire à l'axe d'articulation du bras d'essuie-glace, qui illustre les moyens de réglage du couple d'essuyage selon l'invention, l'essuie-glace étant illustré en position d'utilisation ;
- la figure 3 est une vue similaire à celle de la figure 2 qui illustre le bras d'essuie-glace en position soulevée, notamment en vue du remplacement de la raclette d'essuyage ; et
- la figure 4 est une vue partielle similaire à celle de la figure 2 qui illustre une variante de réalisation de la pince de réglage et de ses moyens de fixation sur la tête d'entraînement.

Dans la description qui va suivre, des composants identiques ou similaires seront désignés par les mêmes chiffres de référence sur les différentes figures.

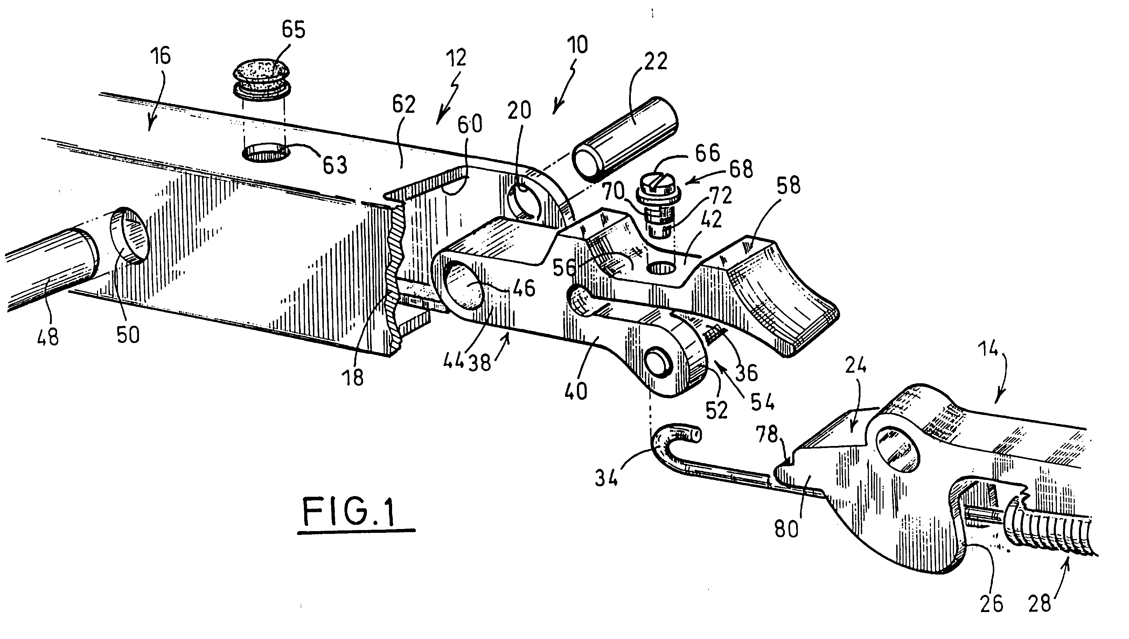

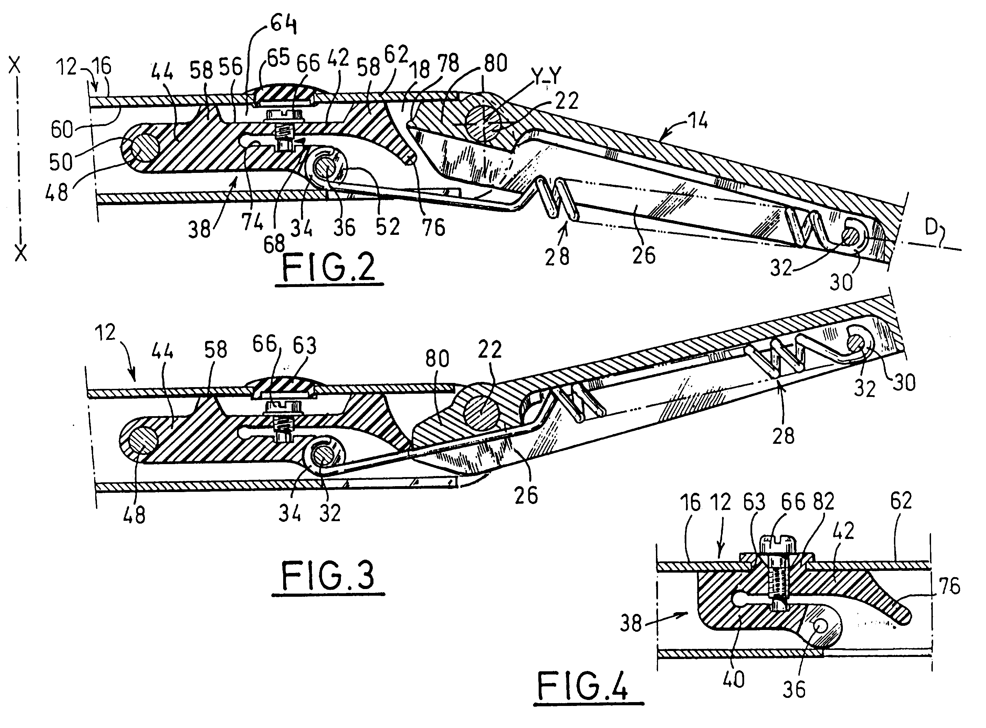

L'essuie-glace 10 illustré aux figures 1 et 2 est constitué pour l'essentiel par une tête d'entraînement 12 et par un bras d'essuie-glace 14.

La tête d'entraînement 12 comporte un corps de tête 16, ici illustrée de manière schématique et avec arrachement partiel sur la figure 1, sous la forme d'un corps en tôle pliée.

La partie arrière, à gauche en considérant les figures 1 et 2, de la tête d'entraînement 12 comporte un perçage conique cannelé (non représenté) qui est prévu pour recevoir l'extrémité cannelée d'un arbre moteur d'essuie-glace (non représenté) pour l'entraînement en rotation alternée de la tête d'entraînement 12 autour d'un axe X-X.

Le corps 16 de la tête d'entraînement 12 comporte deux faces latérales parallèles 18 dont la partie avant, à droite en considérant les figures 1 et 2, comporte deux trous alignés 20 qui sont destinés à recevoir une tige 22 d'articulation du bras d'essuie-glace 14, sur la tête d'entraînement 12, autour d'un axe d'articulation Y-Y qui est sensiblement perpendiculaire à l'axe X-X.

A cet effet, le bras d'essuie-glace 14 comporte par exemple une portion d'extrémité arrière 24 qui reçoit la tige d'articulation 22 dans sa partie supérieure et dont la partie inférieure comporte deux ailes parallèles 26 qui lui confèrent une section sensiblement en forme de U renversé.

Le couple nominal d'essuyage de l'essuie-glace 10 est, dans les exemples de réalisation illustrés sur les figures, assuré au moyen d'un ressort de traction 28 agencé entre la tête d'entraînement 12 et le bras d'essuie-glace 14.

A cet effet, et comme on peut le voir sur la figure 2, une première extrémité 30 du ressort de traction 28 est accrochée sur une tige transversale 32 du bras d'essuie-glace 14 tandis que sa seconde extrémité 34 est accrochée sur une tige transversale 36 qui s'étend parallèlement à l'axe Y-Y, donc perpendiculaire à l'axe X-X, et qui appartient à une pince 38 de réglage de la force d'essuyage, conformément aux enseignements de l'invention.

La pince de réglage 38 est une pièce moulée en matière plastique qui comporte une première branche déformable élastiquement 40 et une seconde branche déformable élastiquement 42 qui sont reliées entre elles chacune à l'une de leurs extrémités par une tête 44 de la pince 38.

Les deux branches 40 et 42 s'étendent dans des plans sensiblement parallèles entre eux à l'intérieur du corps 16 de la tête d'entraînement 12.

La tête 44 de raccordement des branches 40 et 42 comporte un trou transversal cylindrique 46 qui est prévu pour recevoir une broche de montage 48 qui est elle-même reçue dans des trous circulaires alignés et opposés 50 formés dans les joues latérales parallèles 18 de la tête d'entraînement 12.

Ainsi, le montage et la fixation de la pince 38 dans la tête d'entraînement s'effectuent par emboîtement, selon une direction transversale parallèle à l'axe Y-Y, d'une broche ou tige de montage 48, c'est-à-dire selon une direction classique de montage en chaîne des différents composants articulés d'un essuie-glace.

L'extrémité libre 52 de la première branche 40 de la pince de réglage 48 comporte un évidement 54 pour le montage en chape de la tige d'accrochage 36 et pour le passage de l'extrémité d'accrochage 34 du ressort de traction 28.

La seconde branche 42 de la pince de réglage 38 comporte, sur sa face extérieure 56 opposée à sa face intérieure tournée vers la première branche 40, deux talons transversaux et parallèles 58, qui sont espacés longitudinalement l'un par rapport à l'autre, en considérant la direction longitudinale de la tête d'entraînement et du bras d'essuie-glace, et qui prennent appui contre la face interne 60 du dos supérieur 62 du corps 16 de la tête d'entraînement 12.

Les talons 58 délimitent entre eux et avec la face interne 60 un logement 64 dans lequel est disposée la tête 66 d'une vis 68 de réglage de la position géométrique de la première branche 40 de la pince de réglage 48, c'est-à-dire de réglage de la distance entre la droite D support de l'effort de traction exercé par le ressort 28 par rapport à l'axe Y-Y (voir figure 2).

A cet effet, le corps fileté 70 de la vis 68 est vissé dans la partie médiane de la seconde branche 42 qui s'étend entre les talons 58 et son extrémité libre lisse 72 prend appui contre une portion en vis-à-vis formée dans la face intérieure 74 de la première branche 40.

Afin de permettre un accès à la vis de réglage, il est bien entendu prévu un trou ou orifice 63 dans le dos supérieur 62 de la tête d'entraînement 12 qui est obturé par un bouchon 65.

Aux figures 2 et 3, la vis de réglage est illustrée en position complètement vissée, c'est-à-dire correspondant à la distance maximale entre la droite D et l'axe Y-Y.

Dans cette position, la lame constituée par la première branche 40 est déformée par rapport à sa position de repos correspondant à sa conception de fabrication.

On comprend que, en dévissant la vis 68, on réduit la distance séparant les branches 40 et 42 qui se rapprochent l'une de l'autre sous l'effet de rappel élastique dû à la conception de la pince 38.

Cette modification de position provoque une variation de la distance séparant la droite D de l'axe Y-Y.

Selon une autre caractéristique de l'invention, l'extrémité libre de la seconde branche 42 comporte un bec 76 réalisé venu de matière qui est susceptible de coopérer avec un cran 78 de profil complémentaire formé dans la partie d'extrémité arrière 80 du bras d'essuie-glace 14.

Comme on peut le voir sur la figure 3, le bec 76 est susceptible d'être reçu dans le cran 78 pour maintenir le bras d'essuie-glace 14 dans une position soulevée, par exemple en vue d'une intervention dans le balai d'essuie-glace.

Du fait des capacités de déformation élastique de la seconde branche 42 de la pince de réglage 38, le bec 76 s'efface élastiquement, en partant de la position d'utilisation illustrée sur la figure 2, lorsque le bras d'essuie-glace 14 pivote dans le sens antihoraire autour de l'axe Y-Y pour venir s'emboîter dans le cran 78.

Cet effacement est favorisé par le profil chanfreiné de l'extrémité arrière 80 du bras d'essuie-glace 14.

Inversement, lorsque l'on désire ramener l'essuie-glace en position d'utilisation, il suffit d'exercer un effort dans le sens horaire sur le balai d'essuie-glace 14, le bec 76 s'effaçant élastiquement.

Dans la variante de réalisation illustrée sur la figure 4, la pince élastique 38 est fixée directement sur le dos supérieur 62 du corps 16 de la tête d'entraînement 12 par exemple par sertissage à chaud d'un téton 82 réalisé venu de matière qui s'étend à travers l'ouverture 63, la tête 66 de la vis de réglage s'étendant alors à l'extérieur de la tête d'entraînement 12 et étant directement accessible pour le réglage de la force d'appui.

## Revendications

1. Essuie-glace (10), notamment de véhicule automobile, du type comportant un bras d'essuie-glace (14) qui porte au moins un balai d'essuie-glace et qui est monté articulé, autour d'un axe d'articulation (Y-Y), sur une tête d'entraînement (12) du bras d'essuie-glace (14), au moins un ressort (28) agencé entre la tête d'entraînement (12) et le bras d'essuie-glace (14) et qui applique à ce dernier une force dont la droite-support (D) n'est pas concourante avec l'axe d'articulation (Y-Y) de manière à appliquer au bras d'essuie-glace (14) un couple d'essuyage, et du type comportant des moyens pour faire varier la distance entre la droite (D) support de la force et l'axe d'articulation (Y-Y), qui comportent une lame (40) déformable élastiquement dont l'une des extrémités est reliée à la tête d'entraînement (12), ou au bras d'essuie-glace, et dont l'autre extrémité (52) sert à l'accrochage du ressort (28), caractérisé en ce que la lame déformable (40) appartient à une pince élastique de réglage (38) dont elle constitue une première branche (40) et dont la seconde branche (42) prend appui contre une portion en vis-à-vis (60, 62) de la tête d'entraînement (12), ou du bras d'essuie-glace.

2. Essuie-glace selon la revendication 1, caractérisé en ce qu'une vis de réglage (68) est interposée entre les deux branches (40, 42) de la pince (38) pour faire varier l'ouverture de la pince et donc déplacer l'extrémité libre (52) de la première branche (40), à laquelle est accroché le ressort (28), par rapport à l'extrémité d'articulation de cette branche (40) sur la seconde branche (42).

3. Essuie-glace selon la revendication 2, caractérisé en ce que la vis (68) est montée vissée dans le corps de l'une des branches (42) et en ce que son extrémité libre (72) prend appui contre une portion en vis-à-vis (74) de l'autre branche (40).

4. Essuie-glace selon l'une quelconque des revendications 1 à 3, caractérisé en ce que les deux branches (40, 42) de la pince (38) sont reliées entre elles par une tête de raccordement (44) qui comporte un trou (46) transversal sensiblement perpendiculaire à la direction longitudinale des branches (40, 42) et qui reçoit une broche (48) de montage de la pince (38) sur la tête d'entraînement (12), ou le bras d'essuie-glace.

5. Essuie-glace selon la revendication 4, caractérisé en ce que la broche de montage (48) s'étend selon une direction sensiblement parallèle à l'axe d'articulation (Y-Y) du bras d'essuie-glace (14) sur la tête d'entraînement (12).

6. Essuie-glace selon l'une quelconque des revendications 1 à 3, caractérisé en ce que la seconde branche (42) de la pince de réglage (38) est fixée sur la tête d'entraînement, ou sur le bras d'essuie-glace, contre ladite portion en vis-à-vis (60, 62).

7. Essuie-glace selon l'une quelconque des revendications précédentes, caractérisé en ce que la pince de réglage (38) est reliée à la tête d'entraînement (12), et en ce que l'extrémité libre de la seconde branche (42) comporte un bec (76) qui est susceptible de coopérer avec un cran correspondant (78) formé sur le bras d'essuie-glace (14, 80) pour maintenir ce dernier dans une position angulaire déterminée par rapport à la tête d'entraînement (12), notamment dans une position soulevée dans laquelle le balai d'essuie-glace n'est pas en contact avec la vitre à essuyer, le bec (76) s'effaçant par déformation élastique de la seconde branche (42).

8. Essuie-glace selon l'une quelconque des revendications précédentes, caractérisé en ce que la face (56) de la seconde branche (42) de la pince élastique (38) opposée à la première branche (40) comporte deux talons (58) espacés longitudinalement qui prennent appui contre une portion en vis-à-vis (60) de la tête d'entraînement (62), ou du bras d'essuie-glace, et entre lesquels (58) est agencée la tête (66) de la vis de réglage (68).

9. Essuie-glace selon la revendication 8, caractérisé en ce que ladite portion en vis-à-vis (60) comporte un orifice (63) d'accès depuis l'extérieur à la vis de réglage (68).

10. Essuie-glace selon la revendication 6 prise en combinaison avec la revendication 3, caractérisé en ce que ladite portion en vis-à-vis (60) comporte un orifice (63) de passage de la tête de la vis de réglage (66) qui s'étend à l'extérieur de la tête d'entraînement (12), ou du bras d'essuie-glace.
